Europäisches Patentamt

European Patent Office

Office européen des brevets

(19)

(11) Publication number: 0 503 214 A1

# EUROPEAN PATENT APPLICATION

(12)

(21) Application number: 91830085.6

(22) Date of filing: 11.03.91

(51) Int. Cl.⁵: G01C 17/00, F41G 3/22

(43) Date of publication of application:
16.09.92 Bulletin 92/38

(84) Designated Contracting States:
BE DE DK ES FR GB GR IT LU NL

(71) Applicant: CONTRAVES ITALIANA S.p.A.
Via Affile 102
I-00131 Roma(IT)

(72) Inventor: Di Berardino, Alessandro
Via Carlo Giuseppe Bertero 59
I-00156 Roma(IT)

Inventor: Fabretti, Sergio
Via Barigioni 2
I-00128 Roma(IT)
Inventor: Provvedi, Furio
Via della Balduina 187
I-00136 Roma(IT)

(74) Representative: Forattini, Amelia et al
c/o Internazionale Brevetti Ingg. ZINI,
MARANESI & C. S.r.l. Piazza Castello 1
I-20121 Milano(IT)

(54) ORIENTATION DEVICE.

(57) The orientation device includes a magnetic sensor (3) which is arranged in an item of headgear (9) worn by the observer (1) and is adapted to provide an observer with alignment data. An external unit (17) provides a preset direction to a computer (7) which compares it with the alignment data and calculates an alignment error data. The observer's alignment error with respect to the preset direction is indicated to the observer in the form of modulated tones by means of the transducer (5) which is constituted by earphones applied to the item of headgear.

Fig. 3

The present invention relates to an orientation device suitable for providing an observer with his indicative positioning error with respect to a preset direction.

The need to indicate to observers particular directions toward which they must concentrate their attention is felt in many fields -- geological surveys, photographic surveys, etc. --, so that there are many possible applications for devices suitable for preventing the observers from having to stay concentrated for long periods of time and from having to keep watch over wide angular sectors.

In order to solve the problem of guiding an observer in a given direction, or more generally in order to solve orientation problems, devices based on gyroscopic systems are currently used; as is well known to the man of the art, these systems have the disadvantage of being bulky, complicated and expensive.

The aim of the present invention is to provide an orientation device which allows an observer to identify a direction toward which he must concentrate his attention, providing him with indications regarding his angular positioning error.

Within the scope of this aim, an object of the invention is to facilitate the operation of positioning the observer in the given direction and to keep this information updated until the target is reached, even in dynamic conditions.

Another object of the invention is to provide a device which can instantly call the observer's attention and can provide him with the reference direction in a straightforward and natural manner, so as not to prevent him from performing his tasks, in the same time.

Not least object of the invention is to provide a device which is functionally simple and economically advantageous.

This aim, these objects and others which will become apparent hereinafter are achieved by an orientation device adapted to provide an observer with its indicative angular positioning error with respect to a preset direction, characterized in that it comprises:

a sensor means adapted to provide data regarding the alignment of said observer, measured with respect to the magnetic north, said data being in the form of an electric signal;

a circuital means adapted to receive said alignment data and data regarding the assigned alignment direction, said circuital means being adapted to compare said alignment data with said assigned direction data so as to generate alignment error data;

a transducer means adapted to receive said alignment error data generated by said circuital means and for generating a corresponding alignment error signal which is understandable to said observer.

Further characteristics and advantages will become apparent from the description of a preferred but not exclusive embodiment of the invention, which is illustrated only by way of non-limitative example in the accompanying drawings, wherein:

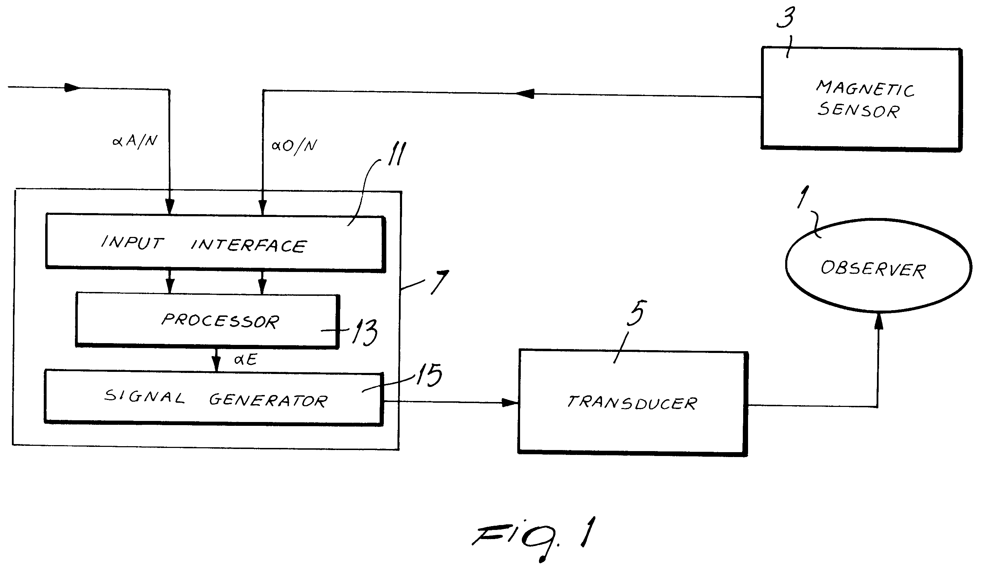

Fig. 1 is a block diagram of the device according to the invention;

Fig. 2 is a diagram of the operating states of the device;

Fig. 3 is a schematic view of a preferred embodiment of the device according to the invention.

With reference to the above figures, the device according to the invention substantially comprises a magnetic sensor 3, which is rigidly associated with the alignment direction of the observer 1, and a transducer 5; both are connected to a circuital means 7.

The magnetic sensor 3 is a sensor which is capable of providing the observer's alignment data, measured with respect to the magnetic north, in the form of an electric signal. The output interface may be a standard serial digital channel (e.g. RS232, RS422 or the like) or a channel for analog signals, capable of transferring with appropriate precision the data related to the angle $a_{O/N}$ between the observer's alignment direction and the magnetic north. The updating of the data of the magnetic sensor must also have an appropriate rate, so as to be able to instantaneously calculate the positioning error and update the information in real time for the observer, with optimization according to the movement times, and therefore to the response times, of said observer.

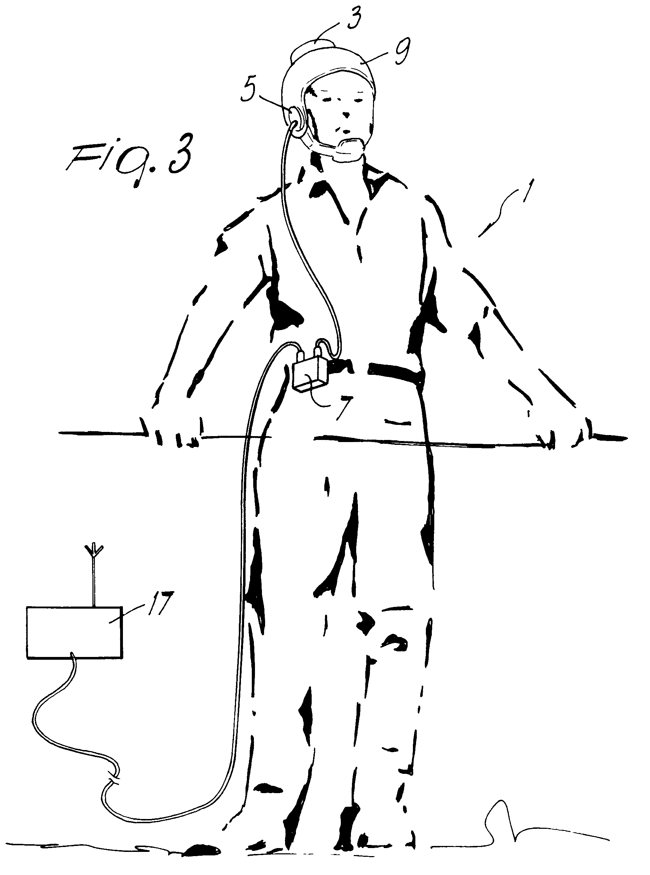

As is known to the man of the art, several magnetic sensors are commercially available and are characterized by precision, accuracy and most of all by a low weight and small size; the sensor 3 is in fact advantageously applied to an item of headgear 9 which is worn by the observer 1, as illustrated in fig. 3.

The circuital means 7 is constituted by a computer comprising an input interface 11, a processor 13, and an output interface 15 adapted to generate the appropriate signals for the transducer 5, as described hereinafter.

The angular datum $a_{O/N}$ is transmitted to the interface 11 of the computer 7, which is also adapted to receive an angular datum $a_{A/N}$ which determines the given direction, always relative to the magnetic north. The angular datum $a_{A/N}$ can be transmitted from an external source and can be received by a receiver unit 17, for example a radio receiver set.

The processor 13 calculates the positioning error $a_E$ of the observer 1:

$$a_E = a_{O/N} - a_{A/N}.$$

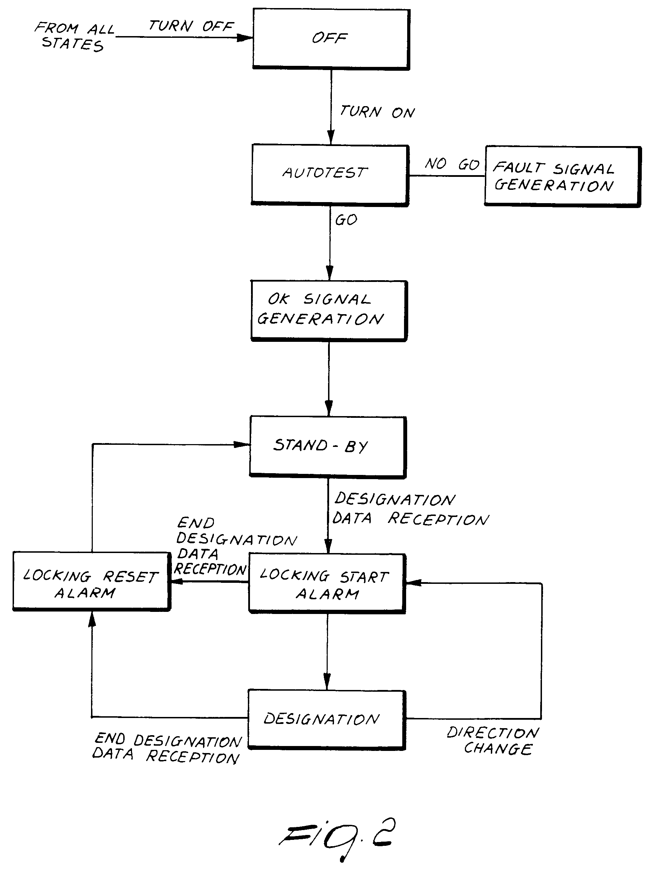

Fig. 2 illustrates in more detail an example of operating diagram of the computer 7.

The signal source 15 controls the transducer 5, which generates the appropriate signals for the observer.

The transducer 5 is the element which constitutes the interface between the observer and the device, and must be able to provide the observer with information regarding the extent and direction of the alignment error in the most natural possible manner.

The illustrated transducer 5 is of the acoustic type and is constituted by earphones which are advantageously applied to the item of headgear 9 so that the observer can receive the information in the two separate left/right channels. In practice, the observer hears a tone in the right or left earphone which guides him in the correct direction: for example, a tone in the right earphone warns the observer to turn right. The tone is furthermore advantageously modulated by a square wave the period whereof is variable and is proportional to the extent of the positioning error.

Reaching of the vicinity of the correct direction, i.e. when the positioning error $a_E$ is equal to $0 \pm 10^\circ$, is appropriately indicated to the observer by a differentiation in the frequency of the tone or by means of a modification of the modulating wave or eventually by eliminating the tone in the headset.

As an alternative to earphones or to the headset, it is possible to use a visual transducer, for example a LED viewer, which transfers to the operator the information regarding the extent and sign of the positioning error similarly to the acoustic transducer.

It has been observed in practice that the invention achieves its intended aim and objects, providing a device adapted to inform an observer on his alignment position with respect to an absolute reference such as the magnetic north, indicating the extent of the error of the current positioning with respect to the assigned direction.

An advantage of the invention is its extreme practicality in use, due to the small size of the device and to the fact that the information is given in a natural and straightforward manner, so as to not distract the observer from his/her specific tasks.

Fig. 3 is a view of a preferred embodiment of the device, wherein the sensor 3 and the headset or earphones 5 are arranged in an item of headgear 9, for example a work helmet, whereas the computer is advantageously arranged in a portable container 7 which is fixed to the belt. The radio receiver set 17 can be arranged, for example, on a motor vehicle.

The device according to the invention is susceptible to numerous modifications and variations, all of which are within the scope of the inventive concept; all the details may furthermore be replaced with technically equivalent elements.

The materials employed, as well as the dimensions, may naturally be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. Orientation device adapted to provide an observer (1) with his indicative angular positioning error with respect to a preset direction, characterized in that it comprises:

   a sensor means (3) adapted to provide data regarding the alignment of said observer, measured with respect to the magnetic north, said data being in the form of an electric signal;

   a circuital means (7) adapted to receive said alignment data and data regarding an assigned alignment direction, said circuital means being adapted to compare said alignment data with said assigned direction data so as to generate alignment error data;

   a transducer means (5), adapted to receive said alignment error data generated by said circuital means and for generating a corresponding alignment error signal which is understandable to said observer.

2. Device according to claim 1, characterized in that said sensor means comprises a magnetic sensor (5) which is rigidly associated with the direction of alignment of said observer (1).

3. Device according to claim 1 or 2, characterized in that said circuital means is constituted by an electronic computer (7) which comprises:

   an input interface (11) adapted to receive said observer alignment data ($a_{O/N}$) and adapted to furthermore receive angular data ($a_{A/N}$) which determine said preset direction;

   a processor (13) adapted to calculate an observer positioning error data on the basis of said alignment data and of said angular data;

a signal source (15) adapted to receive said error data and to generate a corresponding signal for said transducer (5).

4. Device according to one or more of the preceding claims, characterized in that said transducer means is of an acoustic type comprising respectively right and left earphones (5), each of said earphones being adapted to provide a modulated tone corresponding to said positioning error.

5. Device according to one or more of the preceding claims, characterized in that said tone is modulated by a square wave with a variable period which is proportional to said positioning error data.

6. Device according to one or more of the preceding claims, characterized in that said transducer means (5) is of a visual type comprising a LED viewer.

7. Device according to one or more of the preceding claims, characterized in that said angular data is provided to said computer (7) by an external unit (17).

8. Device according to one or more of the preceding claims, characterized in that said external unit is constituted by a radio receiver set (17).

9. Device according to one or more of the preceding claims, characterized in that said transducer (5) and said sensor means (3) are included in an item of headgear (9).

10. Device according to one or more of the preceding claims, characterized in that said circuital means is comprised within a portable case body (7) which is separate from said sensor and said transducer.

Fig. 1

EP 0 503 214 A1

FROM ALL STATES —— TURN OFF ——→ OFF

TURN ON ↓

AUTOTEST —— NO GO —— FAULT SIGNAL GENERATION

GO ↓

OK SIGNAL GENERATION

↓

STAND - BY

DESIGNATION DATA RECEPTION ↓

LOCKING RESET ALARM ←—— END DESIGNATION DATA RECEPTION —— LOCKING START ALARM

DESIGNATION

END DESIGNATION DATA RECEPTION

DIRECTION CHANGE

$Fig. 2$

6

Fig. 3

European Patent
Office

**EUROPEAN SEARCH REPORT**

Application Number

EP 91 83 0085

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 016 684 (CROUZET) <br> * Figures 3,4; abstract; claims 1,3,8; page 5, lines 4-11 * <br> --- | 1-4,6,7 ,9,10 | G 01 C 17/00 <br> F 41 G 3/22 |
| Y | WO-A-8 505 444 (TSCHANNEN) <br> * Abstract; figure 5; claims 4,5,19 * <br> --- | 1-4,6,7 ,9,10 | |
| A | DE-A-2 906 950 (FUNAKUBO) <br> * Claims 1,2,4 * <br> --- | 1,2 | |
| A | CA-A-1 015 556 (WESTINGHOUSE) <br> * Claims 1-3 * <br> ----- | 1,2 | |
| | | | **TECHNICAL FIELDS SEARCHED (Int. Cl.5)** |
| | | | G 01 C <br> F 41 G |

The present search report has been drawn up for all claims

| Place of search | Date of completion of the search | Examiner |
|---|---|---|
| THE HAGUE | 26-10-1991 | KOLBE W.H. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................
& : member of the same patent family, corresponding
   document

EPO FORM 1503 03.82 (P0401)